Europäisches Patentamt

European Patent Office

Office européen des brevets

(11) Publication number: **0 344 977 B1**

# EUROPEAN PATENT SPECIFICATION

(45) Date of publication of patent specification: **05.10.94**  (51) Int. Cl.5: **C08G 75/02**

(21) Application number: **89305329.8**

(22) Date of filing: **25.05.89**

The file contains technical information submitted
after the application was filed and not included in
this specification

(54) **Process for the preparation of cross-linked polyarylene sulfide.**

(30) Priority: **26.05.88 JP 129390/88**

(43) Date of publication of application:
**06.12.89 Bulletin 89/49**

(45) Publication of the grant of the patent:
**05.10.94 Bulletin 94/40**

(84) Designated Contracting States:
**AT BE CH DE ES FR GB GR IT LI LU NL SE**

(56) References cited:
**EP-A- 0 166 368**

(73) Proprietor: **KUREHA KAGAKU KOGYO
KABUSHIKI KAISHA
1-9-11, Nihonbashi, Horidome-cho
Chuo-ku Tokyo 103 (JP)**

(72) Inventor: **Iizuka, Yo
1-36-10 Iino, Chuodai
Iwaki-shi Fukushima-ken (JP)**
Inventor: **Hosokawa, Toshio
33-6 Higashi
Onahama-Tamagawa-machi
Iwaki-shi Fukushima-ken (JP)**
Inventor: **Itoh, Yoshinobu
55-1 Sekishita**

**Nishiki-machi
Iwaki-shi Fukushima-ken (JP)**
Inventor: **Yamamoto, Shinji
55-1 Sekishita
Nishiki-machi
Iwaki-shi Fukushima-ken (JP)**
Inventor: **Kusida, Kazuo
4-80 Sakuragaoka
Iwaki-shi Fukushima-ken (JP)**
Inventor: **Katto, Takayuki
1-1-5 Nakaoka-machi
Iwaki-shi Fukushima-ken (JP)**

(74) Representative: **Woods, Geoffrey Corlett et al
J.A. KEMP & CO.
14 South Square
Gray's Inn
London WC1R 5LX (GB)**

**Description**

The present invention relates to a process for producing a cross-linked granular polyarylene sulfide by reacting a metal sulfide, a dihaloaromatic compound and a polyhaloaromatic compound in an organic amide solvent, comprising:

(1) an initial-stage polymerization step (A) which prepares a polyarylene sulfide of a low melt viscosity;
(2) a temperature raising step (B); and
(3) a second-stage polymerization step (C),

wherein the ratio of water to the metal sulfide, the reaction temperature and the temperature increasing rate are regulated.

As a typical method to produce a polyarylene sulfide (hereinafter referred to as "PAS"), for example a polyphenylene sulfide, a process comprising reacting an aromatic compound having at least one halogen substituent, such as a dihaloaromatic compound, and an alkali metal sulfide in an organic amide solvent such as N-methylpyrrolidone is disclosed in US-A-3,524,835.

Although cross-linked PAS can be produced even with this process, since the obtained polymer is a fine powder having an average particle diameter of not more than 50 $\mu$m, the recovery, washing and drying of said polymer are not easy and handling of the polymer is troublesome since the polymer is prone to scatter during molding or causes blocking in a hopper.

Methods to obtain a PAS in a granular form by allowing an appropriate amount of water to exist during or after the polymerization step are disclosed in US-A-3,919,177; US-A-4,645,826 (=EP-A-166 368), US-A-4,745,167, EP-A-244,187, EP-A-256,757 and JP-A-62-285,922 (1987). However, when it is tried to produce a highly cross-linked PAS by reacting a dihaloaromatic compound mixed with a polyhaloaromatic compound, which has more than 2 halogen substituents in a molecule, with an alkali metal sulfide, large masses of agglomerated particles of PAS are prone to be formed during polymerization and cause some difficulties in handling.

As a method to obtain a granular PAS having a relatively high melt viscosity, for instance several thousands to several ten thousands poise measured at 310°C and a shear rate of 1,200/second, US-A-4,794,164 discloses a two-stage polymerization method in which the second-stage polymerization is conducted at a high temperature of from 245 to 290°C, the temperature of the last half of the second-stage is lowered to from 220 to 250°C, the temperature is maintained at that level for a predetermined period of time and thereafter the polymerization is continued at a temperature and for a period of time which are determined by necessity. However, this method also has a possibility of forming large masses of agglomerated particles of PAS during polymerization in case of producing such a highly cross-linked PAS as in the present invention. Therefore commercial production of this type of PAS by this method is not always easy US-A-4,116,947 discloses a method of producing a branched PAS having a low melt flow value and so which is able to be molded without any prior curing, by using dihaloaromatic compound(s) and at least one polyhaloaromatic compound having more than two halogen substituents in the molecule, in the presence of a small amount of water. Although the PAS obtained by this method is thought to have enough melt viscosity to be molded, the method is different from the one to produce a granular PAS of a high melt viscosity of the present invention.

The present invention seeks to provide a process for producing a granular PAS having a high melt viscosity and a high degree of cross-linkage and which is easy to handle during the production thereof and also which has excellent handling characteristics at the time of molding. The present invention also seeks to provide a process for producing a highly cross-linked granular PAS having a high melt viscosity and which becomes a gel when melted.

The present invention provides a process for the preparation of a cross-linked granular PAS having an average particle diameter of from 100 to 2,000$\mu$m comprising:

(A) an initial-stage polymerization step for obtaining a PAS by reacting an alkali metal sulfide, a dihaloaromatic compound (DHA) and 0.003 to 0.1 mol of a polyhaloaromatic compound (PHA) per mol of the alkali metal sulfide, the PHA having three or more halogen substituents per molecule, in an organic amide solvent in the presence of from 0.5 to 2.9 moles of water per mol of said alkali metal sulfide at a temperature of not lower than 180 and lower than 235°C until the total conversion ratio of said DHA and PHA reaches from 50 to 98% and the melt viscosity of a PAS obtained ($\eta_1$*) is from 0.5 to 500 Pas (5 to 5,000 poise) measured at 310°C and a shear rate of 1,200/second;

(B) a temperature raising step in which, while adjusting the amount of water as necessary to from 2.5 to 7 moles per mol of fed alkali metal sulfide, the temperature is raised from the temperature of step (A) to 240°C under such conditions that the melt viscosity of the polymer obtained at 240°C ($\eta_2$*) is from 30 to 1,000 Pas (300 to 10,000 poise) measured at 310°C and a shear rate of 1,200/second and the

2

temperature is further raised from 240°C to the temperature for step(C) at a rate of from 10 to 100°C/hour; and

(C) a second-stage polymerization step for further continuing polymerisation at a temperature of from 245 to 290°C until the melt viscosity of the final PAS product ($\eta_3{}^*$) reaches a value not lower than 1 x $10^4$ Pas (1 x $10^5$ poise) measured at 330°C and a shear rate of 2/second.

The alkali metal sulfides which may be used in the present invention include lithium sulfide, sodium sulfide, potassium sulfide, rubidium sulfide, cesium sulfide and mixtures thereof. These alkali metal sulfides can be used in the form of a hydrate, aqueous mixture or anhydride. Among these alkali metal sulfides, sodium sulfide is the most inexpensive, and is therefore preferable for industrial use. Among the many forms of sodium sulfide, the pentahydrate is preferable since its purity is high.

A small amount of an alkali metal hydroxide may be jointly used for reacting with and eliminating any influence of alkali metal bisulfide and/or alkali metal thiosulfate which might exist in trace amounts in the alkali metal sulfide.

Examples of the dihaloaromatic compounds which may be used in the present invention are p-dichlorobenzene, 2,5-dichlorobenzene, p-dibromobenzene, m-dichlorobenzene, 1,4-dichloronaphthalene, 1-methoxy-2,5-dichlorobenzene, 4,4'-dichlorobiphenyl, 4,4'-dibromobiphenyl, 2,4-dichlorobenzoic acid, 2,5-dichlorobenzoic acid, 3,5-dichlorobenzoic acid, 2,4-dichloroaniline, 2,5-dichloroaniline, 3,5-dichloroaniline, 4,4'-dichlorodiphenyl ether, 4,4'-dichlorodiphenyl sulfone, 4,4'-dichlorodiphenyl sulfoxide, 4,4'-dichlorodiphenyl ketone, analogous compounds thereof and mixtures thereof. Among them, the compounds having p-dihalobenzene, for example p-dichlorobenzene, as a main constituent, are preferable.

Examples of the polyhaloaromatic compound having three or more halogen substituents in the molcule which may be used in the present invention include 1,2,3-trichlorobenzene, 1,2,4-trichlorobenzene, hexachlorobenzene, 1,3,5-trichlorobenzene, 1,2,3,4-tetrachlorobenzene, 1,2,4,5-tetrachlorobenzene, 1,3,5-trichloro-2,4,6-trimethylbenzene, 2,4,6-trichlorotoluene, 1,2,3-trichloronaphthalene, 1,2,4-trichloronaphthalene, 1,2,3,4-tetrachloronaphthalene, 2,2',4,4'-tetrachlorobiphenyl, 2,2',4,4'-tetrachlorobenzophenone, 2,2',4-trichlorobenzophenone, analogous compounds thereof and mixtures thereof. Among these polyhaloaromatic compounds, 1,2,4-trihalobenzene and 1,3,5-trihalobenzene are preferable.

Examples of the organic amide solvent which may be used in the present invention include N-methylpyrrolidone (NMP), N-ethylpyrrolidone, N,N-dimethylformamide, N,N-dimethylacetamide, N-methylcaprolactam, tetramethylurea, 1,3-dimethyl-2-imidazolidinone, hexamethylphosphoric triamide, analogous compounds thereof and mixtures thereof. Among these solvents, N-methylpyrrolidone and 1,3-dimethyl-2-imidazolidinone are especially preferable.

In the polymerization process of the present invention, it is preferable that all steps, especially a dehydration step which is usually performed before starting the polymerization reaction to adjust the amount of water in the system, be conducted in a reactor of which at least a part contacting the reaction solution is composed of a titanium material to prevent decomposition of the solvent or polymer and contamination of the product by heavy metal salts.

In the present invention, since stirring is essential for the granulation of the cross-linked PAS, the reactor should have a stirring device for rendering the reaction mixture into a stirred-up state during the reaction.

The polymerization reaction of the present invention is performed in at least two steps (A) and (C) which differ in the amount of water existing in the system and in the reaction temperature. The term "at least two steps" above means that an auxiliary step or steps may be inserted before, after or between said two steps, so long as the effect of the present invention derived from the combination of the two steps (A) and (C) is realized.

It is also a feature of the present invention that during the change from step (A) to step (C), the temperature increasing rate is properly controlled so that the progress of polymerization to a high degree and the progress of granulation are adequately balanced.

In the initial-stage polymerization step (A) of the present invention, DHA and PHA reacts with an alkali metal sulfide in the presence of from 0.5 to 2.9 moles of water per mol of said alkali metal sulfide at a temperature of not lower than 180°C and lower than 235°C until the total conversion ratio of DHA and PHA reaches from 50 to 98 mol% and the polymer obtained is a cross-linked PAS having a melt viscosity, ($\eta_1{}^*$), of from 0.5 to 500 Pas (5 to 5,000 poise) [hereinafter ($\eta_1{}^*$) is a value measured at 310°C and a shearing rate of 1,200/second]. The polymerization reaction is performed by adding the halogenated aromatic compounds and an alkali metal sulfide to an aromatic amide solvent and then increasing the reaction temperature to a predetermined value.

When the amount of water in the alkali metal sulfide is less than the prescribed amount, the necessary amount of water should be supplied. When the amount of water is too high, the surplus portion should be taken out of the system by a method known in the art, for instance by heating the solvent containing the alkali metal sulfide from 150°C to around 210°C before adding the halogenated aromatic compounds. The amount of water in the polymerization system should be from 0.5 to 2.9 moles per mol of the fed alkali metal sulfide

When the water content is less than 0.5 mol, an undesirable reaction such as decomposition of the product PAS takes place. On the other hand, when the water content exceeds 2.9 moles, an undesirable phenomenon such as a large reduction of the polymerization rate or generation of a thiophenol due to a decomposition of the components in the system takes place.

An amount of water of from 1.0 to 2.4 moles per mol of the alkali metal sulfide is most preferred because it promotes the polymerization very smoothly. The amount of an organic amide solvent in the polymerization reaction is preferably from 0.2 to 5 litres, more preferably 0.3 to 1 litre, per mol of alkali metal sulfide.

The mol ratio of the halogenated aromatic compounds to the alkali metal sulfide in the reaction is preferably from 0.98:1 to 1.3:1, more preferably from 0.98:1 to 1.05:1.

When the ratio is less than 0.98:1 or exceeds 1.3:1, it becomes difficult to obtain a cross-linked PAS having a high melt viscosity.

The amount of PHA used in the polymerization reaction in the present invention is preferably from 0.003 to 0.1 mol per mol of the alkali metal sulfide. When the amount is less than 0.003 mol, it becomes very difficult to obtain a cross-linked PAS having a high melt viscosity. When the amount exceeds 0.1 mol, granulation of the product is difficult because the product becomes too highly cross-linked. The most preferred amount of PHA is from 0.005 to 0.05 mol per mol of the sulfide.

The initial-stage polymerization step is performed at a temperature of not lower than 180 and lower than 235°C. Too low a temperature makes the reaction rate too slow. A temperature exceeding 235°C is prone to cause decomposition of the cross-linked PAS produced and the solvent, making it impossible to obtain a cross-linked PAS having a high melt viscosity. The preferred temperature is from 200 to 225°C.

The end point of the initial-stage polymerization step (A) is the point when the total conversion of DHA and PHA in the system has reached 50 to 98 mol%. When the conversion is less than 50 mol%, undesirable reactions such as decomposition of the components takes place during the second-stage polymerization step (C). When the conversion exceeds 98 mol%, the cross-linked PAS obtained after the second-stage polymerization step results in a fine powder, not in granules which are easy to handle.

The most preferred conversion ratio is from 85 to 95 mol%, since a stable reaction to obtain an adequately granulated cross-linked PAS having a high melt viscosity is possible within this range.

The conversion ratio (%) of halogenated aromatic compounds (hereinafter referred to as "HAC") in the present invention is calculated by either of the following equations.

(a) In the case that HAC is added in excess of an alkali metal sulfide, both in mol:

Conversion ratio (%) = [Amount of HAC fed (mol) - Amount of residual HAC (mol)]/ [Amount of HAC fed (mol) - Amount of excess HAC (mol)] x 100.

(b) In cases other than (a):

Conversion ratio (%) = [Amount of HAC fed (mol) - Amount of residual HAC (mol)]/ [Amount of HAC fed (mol)] x 100

In the above equations, the molar number of HAC is calculated on an assumption that all HAC has two halogen substituents in a molcule, taking into consideration the way of reaction between alkali metal sulfide and HAC (this assumption is only for the calculation of the conversion ratio). In this calculation method, 1 mol of dichlorobenzene corresponds to 1 mol of HAC, but 1 mol of trichlorobenzene corresponds to 1.5 moles of HAC and 1 mol of tetrachlorobenzene to 2 moles of HAC.

The melt viscosity of the cross-linked PAS at the end of initial-stage polymerization step (A) ($\eta_1{}^*$) is from 0.5 to 500 Pas (5 to 5,000 poise). A range of from 1 to 300 Pas (10 to 3,000 poise) is especially preferred because this viscosity range gives an adequately granulated cross-linked PAS. When the melt viscosity ($\eta_1{}^*$) is less than 0.5 Pas (5 poise), an undesirable reaction such as decomposition of the reaction mixture in the polymerization system during the second-stage polymerization step (C) is likely to occur. When the melt viscosity exceeds 500 Pas (5,000 poise), adequate granulation will not take place during the second-stage polymerization step (C) and the cross-linked PAS produced is prone to be a fine powder.

In the polymerization, various kinds of salts referred to as a polymerization aid or polymerization catalyst, such as carboxylic alkali metal salts, carboxylic alkaline earth metal salts, sulfonic alkali metal salts, lithium chloride, lithium carbonate or potassium fluoride, can be added within an amount such that the features of the present invention are not damaged.

The effects which can be expected by the addition of said salts are (1) reduction of the amount of water which is present in the second-stage polymerization step (C) and (2) reduction of reaction pressure.

After the initial-stage polymerization step (A) is over, the water content in the system is adjusted to from 2.5 to 7 moles per mol of fed alkali metal sulfide. In other words, when the amount of water present in the initial-stage polymerization step is not enough to perform the succeeding step, the necessary amount of water is added. When the overall amount of water in the system is less than 2.5 moles or more than 7 moles per mol of an alkali metal sulfide, adequate granulation of the final cross-linked PAS product becomes impossible. The preferable range of water content is from 2.7 to 6 moles since this range makes it easy to obtain a highly cross-linked PAS which is adequately granulated and which becomes a gel under melting.

The expression "becomes a gel under melting" in the present invention means a situation in which, when the highly cross-linked PAS of the present invention is heated to substantially the temperature as the melting point of a conventional PAS having a low degree of cross-linkage, polymer particles which are not perfectly melted partially exist; accordingly the whole polymer presents a gel-like state.

Control of the conditions between the initial-stage polymerization step (A) and the second-stage polymerization step (C) is an important factor in practicing the present invention.

The present inventors have studied the change in the course of step (A) to step (C) in detail and have found the following:

(1) during the raising of the reaction temperature to the predetermined temperature of the second-stage polymerization step (C) after adjusting the amount of water as prescribed for step (C) at the end of step (A), agglomeration and growing of phase-separated polymer particles start; simultaneously to the growing of the particles, the melt viscosity of the polymer increases rapidly;

(2) agglomeration and growth of the polymer particles start at around 240°C and become active along with the temperature increase; and

(3) an excess agglomeration of the particles to an undesirable size occurs at a temperature higher than around 240°C.

Therefore, in order to obtain a cross-linked PAS having a desirable size of granules and which is easy to handle, it is necessary to perform the granulation by adequately controlling the agglomeration and growth of the particles at temperatures higher than around 240°C and substantially stop excess agglomeration when the polymer particles reach the desirable size.

As a result of further more detailed studies, the present inventors found that, to obtain a cross-linked PAS having the desirable size of granules, it is necessary to satisfy the following two conditions:

(1) when raising the temperature, the a melt viscosity of the polymer obtained at 240°C, at which temperature agglomeration and growth of polymer particles starts to be active ($\eta_2$*) is from 30 to 1000 Pas (300 to 10,000 poise)[hereinafter, the melt viscosity value, ($\eta_2$*), is the one measured at 310°C and a shear rate of 1,200/second];

(2) the rate of raising the temperature is from 10 to 100°C/hour at a temperature of not less than 240°C.

Accordingly, after the initial-stage polymerization step (A) is over, the water content is adjusted and heating is conducted so that the polymer product will have the prescribed value of melt viscosity ($\eta_2$*).

When the melt viscosity ($\eta_2$*) is below 30 Pas (300 poise), excess agglomeration of the polymer particles take place during the temperature raising to higher than 240°C. When the melt viscosity is over 1000 Pas (10,000 poise), further growth of the polymer particles is impossible no matter how the temperature raising rate is changed within a practical range and the cross-linked PAS obtained is a fine powder which is troublesome to handle. The preferred melt viscosity ($\eta_2$*) from 70 to 500 Pas (700 to 5,000 poise).

In the method of the present invention, a sharp rise of melt viscosity starts at around 240°C during the shifting from the initial stage polymerization step to the second-stage polymerization step. Therefore, when the temperature raising rate from around 240°C and thereafter is as slow as less than 10°C/hour, the polymerization reaction proceeds and the melt viscosity of the polymer become high before the particles of the phase separated polymer grow to an adequate size, and as a result fusing and growth of the cross-linked PAS never occur and only a fine polymer powder can be obtained. On the other hand, when the raising rate from around 240°C and thereafter is as fast as more than 100°C/hour, growth of particles advances before the viscosity is increased, resulting in excess agglomeration of cross-linked PAS particles.

A temperature raising rate at 240°C and thereafter of from 10 to 100°C/hour is essential, 20 to 70°C/hour is preferable and 30 to 60°C/hour is more preferable.

The temperature raising step (B) is a step for raising the temperature of from 180 to 235°C in the initial-stage polymerization step (A) to a temperature of from 245 to 290°C in the second-stage polymerization step (C). For this step (B), any heating method can be used as far as the above conditions (1) [($\eta_2$*)] and (2) [temperature raising rate], are satisfied. For example, the temperature can be lowered temporarily to adjust the water content of the system.

Progress of the granulation in this step can be estimated by the change in stirring power. When the change of stirring power indicated by input power (kW) per unit volume of slurry with constant r.p.m. of the stirrer is checked, a sharp change of stirring power can be seen between around 240°C and around 250°C in the internal temperature.

In the step (C), the polymerization reaction is continued at from 245 to 290°C in the presence of water in an amount as adjusted in step (B), namely from 2.5 to 7 moles water per mol of the fed alkali metal sulfide. When the polymerization temperature is lower than 245°C, it is likely that the final product cannot be granulated adequately. When the temperature exceeds 290°C, the cross-linked PAS produced or the polymerization solvent is likely to be decomposed. The polymerization temperature in this step preferably from 250 to 270°C. The polymerization time in this step is preferably from 0.5 to 20 hours; in most cases from 1 to 10 hours is enough.

As explained above, according to the method of the present invention, it is supposed that granulation of the polymer starts at around 240°C and is almost substantially completed in the course of raising the temperature to that of the second-stage polymerization step, namely during step (B). However, growth of particle size occurs to some extent too in the second-stage polymerization step. It is therefore necessary that the melt viscosity of the final polymer ($\eta_3$*) is increased to an extent not to cause any excess growth of particles in the second-stage polymerization step. Accordingly, proper selection of starting materials and polymerization conditions is important. Selection should be made to make the melt viscosity of the finally obtained polymer ($\eta_3$*) not less than $1 \times 10^4$ Pas ($1 \times 10^5$ poise). The preferred viscosity is not less than $5 \times 10^4$ Pas ($5 \times 10^5$ poise) [hereinafter the melt viscosity value, ($\eta_3$*) is the one measured at 330°C and a shear rate of 2/second].

In the foregoing description about the polymer particles, the expression "granulated polymer particles which are easy to handle" means polymer particles having an average particle diameter of from 100 to 2,000 $\mu$m, preferably from 200 to 1,000 $\mu$m, more preferably from 300 to 800 $\mu$m and the expression "fine powdery polymer which is troublesome to handle" means a polymer having an average particle size of less than 100 $\mu$m.

After-treatment in the polymerization process of the present invention can be done by known methods. For instance, after completion of the second-stage polymerization reaction the reaction mixture (slurry) is filtered without dilution or after diluting with a diluent, such as water, an alcohol or a hydrocarbon solvent, and the filtered polymer is washed with water, dehydrated and dried to obtain a crosslinked PAS.

If necessary, a polymer cake can be washed with an organic solvent such as an alcohol or acetone, after the filtration of the slurry or after the washing with water, or the product can be immersed in an aqueous solution of a strong acid having a pH of below 2 or a 0.1 to 30 wt% aqueous solution of a salt of a strong acid and a weak base as described in JP-A-62-4872.

The cross-linked PAS obtained from the process of the present invention is a granular polymer excellent in free-flowing property, having a melt viscosity ($\eta_3$*) of not lower than $1 \times 10^4$ Pas ($1 \times 10^5$ poise), an average particle diameter of from 100 to 2,000 $\mu$m and a bulk density of not less than 0.25 g/ml.

By the present invention, it has become possible to produce industrially a cross-linked PAS with excellent handling qualities and a high melt viscosity in commercial plants.

The term "cross-linked PAS with excellent handling qualities" means;

(1) when a slurry of the PAS is discharged from a polymerizer, it is easy to transport and separate from water; and

(2) since the dried granulated PAS has excellent free-flowing properties and hardly any lumps, (a) it is easy to transport as it is, to put into bags and to keep in storage, and (b) in a melt molding process, it does not flock in a hopper and is good in being supplied to a machine.

In the present invention, the polymerization reaction is performed in two stages as disclosed in US-A-4,645,826 (=EP-A-166 368). By this method, the temperature raising rate can be controlled adequately while balancing a progresses of the polymerization and the granulation. As a result, it is possible to produce a highly cross-linked PAS, becoming gel under melting, which has been impossible, so far, to produce in granular form. Because of its granular form, the highly cross-linked PAS of the present invention has excellent handling properties as described above.

The fact that the cross-linked PAS having high melt viscosity produced by the process of the present invention becomes gel under melting, clearly suggests that the PAS is cross-linked three-dimensionally.

The PAS produced by the process of the present invention can be used alone as a sintered porous body, for example, as a filter having excellent corrosion-resistance and heat-resistance, and it can be further added to a conventional PAS composition for use, for instance, as an anti-flash agent in injection molding, weld strength modifier, polymer reforming agent such as a crystallization degree improver for, for example injection molded products as disclosed in JP-A-63-75,369.

The present invention is further described in the following Examples.

EXAMPLE 1:

1,100 kg of N-methyl-2-pyrrolidone (hereinafter referred to as "NMP") and 372.7 kg of hydrous sodium sulfide (purity: 46.07% by weight) were supplied into a titanium-lined polymerizer and heated to around 202°C to distill out 140 kg of water (1.5 moles of water per mol of alkali metal sulfide).

318.5 kg of p-dichlorobenzene and 5.792 kg of 1,2,4-trichlorobenzene were further supplied into the polymerizer, and polymerized at 220°C for 5 hours to complete the initial-stage polymerization.

Then 97 kg of water was added (the internal temperature of the polymerizer had dropped to around 200°C), and the mixture was heated to 255°C at a rate of about 40°C/hour and further polymerized at that temperature for 5 hours. The amount of water present in the system was 4 moles per mol of alkali metal sulfide.

The resulting slurry containing the polymer was passed through a screen having approximately 0.1 mm openings and the particulate polymer only was separated. The obtained polymer was washed with acetone and then with water to obtain a washed polymer.

The washed polymer was immersed in a 2% aqueous solution of $NH_4Cl$ at 40°C for 30 minutes, washed with water and fluidizedly dried at 110°C for 3 hours.

The yield of the granular polymer was 85%. The melt viscosity ($\eta_3^*$), melt index and average particle diameter of the obtained cross-linked polymer were measured and are shown in Table 1. Samples of the polymer were taken at several stages during the polymerization reaction to study the progress of the polymerization. Namely, portions of slurry were taken out from the polymerizer at the end of the initial-stage polymerization (220°C, 5 hours), immediately after the addition of water and when the temperature reached 240°C during the temperature raising step and the conversion ratio of HAC, melt viscosity, and melt flow rate of the polymer in the samples were measured. The results are also shown in Table 1. These measurements were made according to the methods described below.

The slurry taken at the time when the granulation of polymer was still insufficient was filtered by suction to remove the liquid portion, washed with water to remove inorganic salts and dried at 80°C for 12 hours under reduced pressure.

Measuring methods:

(1) Conversion ratio of HAC.

For the calculation of the ratio with the equations described in page 10 of the present specification, the residual amounts of DHA and PHA were determined by gas chromatography.

(2) Melt viscosity.

Test pieces were prepared by pressing a sample polymer to a sheet at 320°C for 30 to 60 seconds and the sheet was cut into small pieces.

The melt viscosity was measured with a Capirograph manufactured by TOYO SEIKI Co.

(3) Melt flow rate.

The melt flow rate was measured according to the method of ASTM-D 1238-70 at 315°C and with a loading of 5 kg. The value is shown in g/10 minutes.

Table 1

| Sample | Conversion Ratio of HAC (%) | Melt Viscosity (poise) Pa·s | Melt Flow Rate (g/10 minutes) | Average Particle Diameter (μm) |
|---|---|---|---|---|
| Taken at the end of initial-stage polymerization | 94.5 | (100) 10 | 4,328 | <50 |
| Taken immediately after the addition of water | — | (250) 25 | 1,443 | <100 |
| Taken at the point when the temperature reached 240°C | 95.3 | (1,800) 180 | 114 | <100 *2) |
| Final Product | 99.8 | $1.5 \times 10^7$ (1.5×10⁶) | ≪1 *1) | 425 |

Note: *1)  The value was almost 0.
*2)  Coarse particles greater then 100μm in diameter are also present.

EXAMPLE 2:

6,000 g of NMP and 3,200 g of hydrous sodium sulfide (purity: 46.00% by weight) were supplied into a titanium-lined 20-litre autoclave and heated to 200°C to distill out 1,394 g of water, 1,166 g of NMP and 12.8 g of hydrogen sulfide. Then, 179 g of water, 4,409 g of NMP, 2,736 g of p-dichlorobenzene and 51.83 g of 1,2,4-trichlorobenzene were supplied to the autoclave and the mixture was heated to 220°C and

8

reacted for 5 hours ($C_6H_4Cl_2$:$Na_2S$ = 1.0067:1; $C_6H_3Cl_3$/$Na_2S$ = 0.0154:1; and $H_2O$/$Na_2S$ = 1.5:1; all in mol ratios).

832 g of water was further added ($H_2O$:$Na_2S$ mol ratio = 4.0:1) and the mixture was heated to 255°C at an average temperature raising rate of 35°C/hour and reacted at that temperature for 5 hours.

After the reaction mixture was cooled, the slurry containing the produced polymer was passed through a screen having approximately 0.1 mm openings to separate the granular polymer only and the polymer was washed with acetone and then with water.

The washed polymer was immersed in a 2% aqueous solution of $NH_4Cl$ at 40°C for 30 minutes, washed with water and dried at 110°C for 3 hours.

The obtained polymer had an average particle diameter of 760 $\mu$m and a melt viscosity ($\eta_3^*$) of 1.3 x $10^6$ Pas (1.3 x $10^7$ poise).

As in Example 1, samples were taken at certain points of the polymerization to study the progress of the polymerization. The conversion amount and the melt viscosity ($\eta_1^*$) at the end of initial-stage polymerization were 95.0% and 15 Pas (150 poise), respectively and the melt viscosity ($\eta_2^*$) was 170 Pas (1,700 poise) when the temperature reached 240°C.

EXAMPLE 3:

Polymerization was performed in the same procedure as Example 2 except that the initial-stage polymerization was performed at 220°C for 10 hours and the temperature raising rate between initial-stage and second-stage polymerizations was about 70°C/hour. The granular polymer obtained had an average particle diameter of 550 $\mu$m and a melt viscosity ($\eta_3^*$) of 1.1 x $10^6$ Pas (1.1 x $10^7$ poise).

During the polymerization, the conversion amount and the melt viscosity ($\eta_1^*$) at the end of initial-stage polymerization were 97.1% and 224 Pas (2,240 poise), respectively and the melt viscosity ($\eta_2^*$) was 580 Pas (5,800 poise) when the temperature reached 240°C.

EXAMPLE 4:

The polymerization was performed in the same concept as in Example 2, namely:

900 g of NMP and 480 g of hydrous sodium sulfide (purity: 46.00% by weight) were supplied into a titanium-lined 3-litre autoclave and heated to 200°C to distill out 220 g of water, 182 g of NMP and 1.9 g of hydrogen sulfide. Then 38 g of water, 668 g of NMP, 410 g of p-dichlorobenzene and 3.95 g of 1,2,4-trichlorobenzene were supplied to the autoclave and the mixture was heated to 220°C for 15 hours. The reaction mixture was then heated to 255°C at an average temperature raising rate of 45°C/hour and reacted at that temperature for 5 hours.

The remaining process was performed as in Example 2 and a granular cross-linked PAS was obtained which had an average particle diameter of 780 $\mu$m and a melt viscosity ($\eta_3^*$) of 7.7 x $10^4$ Pas (7.7 x $10^5$ poise).

The conversion amount and the melt viscosity ($\eta_1^*$) at the end of initial-stage polymerization were 97.8% and 56 Pas (560 poise), respectively and the melt viscosity ($\eta_2^*$) was 72 Pas (720 poise) when the temperature reached 240°C.

EXAMPLE 5:

220.6 g of hydrous sodium sulfide (purity: 46.2% by weight) and 1,000 g of NMP were supplied into a 3-litre autoclave and heated to 200°C under stirring in a nitrogen atmosphere to distill out 83.3 g of water, 84.4 g of NMP and 0.11 mol of hydrogen sulfide.

191.0 g of p-dichlorobenzene, 4.1 g of 1,2,4-trichlorobenzene, 25.6 g of water and 378.8 g of NMP were added and the mixture was heated to 220°C under stirring in a nitrogen atmosphere and reacted for 10 hours to complete the initial-stage polymerization (the amount of water present in the system was about 2.8 moles per mol of sodium sulfide).

Subsequently, 32.7 g of water was pumped into the autoclave and, after further replacing the atmosphere with nitrogen, the mixture was heated to 255°C at a raising rate of about 26°C/hour and reacted for additional three hours.

The reaction product was slightly grayish granules having an average diameter of about 600 $\mu$m and a melt viscosity ($\eta_3^*$) of 0.98 x $10^6$ Pas (0.98 x $10^7$ poise).

The conversion amount and the melt viscosity ($\eta_1^*$) at the end of initial-stage polymerization were 96% and 3 Pas (30 poise), respectively and the melt viscosity ($\eta_2^*$) was 155 Pas (1,550 poise) when the temperature reached 240°C.

COMPARATIVE EXAMPLE 1:

The polymerization was performed in the same manner as in Example 2 except that the initial-stage polymerisation was conducted at 220°C for 3 hours and the average temperature raising rate was 40°C/hour. The experiment was suspended on the way since the produced polymer particles began to agglomerate excessively when the temperature reached around 245°C in the course of temperature raising.

In the course of polymerization operation, the conversion amount and the melt viscosity ($\eta_1{}^*$) at the end of initial-stage polymerization were 88% and less than 0.5 Pas (5 poise), respectively and the melt viscosity ($\eta_2{}^*$) was 5.6 Pas (56 poise) when the temperature reached 240°C.

**Claims**

1. A process for the preparation of a cross-linked granular polyarylene sulfide having an average particle diameter of from 100 to 2,000μm, comprising:

   (A) an initial-stage polymerization step for obtaining a polyarylene sulfide by reacting an alkali metal sulfide, a dihaloaromatic compound and 0.003 to 0.1 mole of a polyhaloaromatic compound per mol of the alkali metal sulfide, the polyhaloaromatic compound having three or more halogen substituents per molecule, in an organic amide solvent in the presence of from 0.5 to 2.9 moles of water per mol of said alkali metal sulfide at a temperature of not lower than 180 and lower than 235°C until the total conversion ratio of said dihalo- and polyhaloaromatic compounds reaches from 50 to 98% and the melt viscosity of a polyarylene sulfide obtained is from 0.5 to 500 Pas (5 to 5,000 poise) measured at 310°C and a shear rate of 1,200/second;

   (B) a temperature raising step in which, while adjusting the amount of water as necessary to from 2.5 to 7 moles per mole of fed alkali metal sulfide, the temperature is raised from the temperature of step (A) to 240°C under such conditions that the melt viscosity of the polymer obtained at 240°C is from 30 to 1000 Pas (300 to 10,000 poise) measured at 310°C and a shear rate of 1,200/second and the temperature is further raised from 240°C to the temperature for step (C) at a rate of from 10 to 100°C/hour; and

   (C) a second-stage polymerisation step for further continuing polymerisation at a temperature of from 245 to 290°C until the melt viscosity of the final polyarylene sulfide product reaches a value not lower than $1 \times 10^4$ Pas ($1 \times 10^5$ poise) measured at 330°C and a shear rate of 2/second.

2. A process according to claim 1, wherein from 0.005 to 0.05 mol of said polyhaloaromatic compound is used per mol of said alkali metal sulfide.

3. A process according to claim 1 or 2, wherein in step (B) the melt viscosity of the polymer obtained at 240°C is 70 to 500 Pas (700 to 5,000 poise).

4. A process according to any one of the preceding claims, wherein in step (B) the temperature is raised from 240°C at from 20 to 70°C/hour.

5. A process according to any one of the preceding claims, which is conducted such that the average particle diameter of the granular cross-linked polyarylene sulfide finally obtained is from 200 to 1,000 μm.

**Patentansprüche**

1. Verfahren zur Erzeugung eines vernetzten, körnigen Polyarylensulfides mit einem durchschnittlichen Teilchendurchmesser von 100 bis 2000 μm, umfassend:

   (A) eine erste Polymerisationsstufe, zum Erhalt eines Polyarylensulfides durch Reaktion eines Alkalimetallsulfides, einer dihaloaromatischen Verbindung und 0,003 bis 0,1 Mol einer polyhaloaromatischen Verbindung pro Mol des Alkalimetallsulfides, wobei die polyhyloaromatische Verbindung drei oder mehr Halogensubstituenten im Molekül hat, in einem organischen Amidlösungsmittel in der Gegenwart von 0,5 bis 2,9 Mol Wasser pro Mol Alkalimetallsulfid bei einer Temperatur von nicht weniger als 180°C und weniger als 235°C, bis das gesamte Umwandlungsverhältnis der dihalo- und polyhaloaromatischen Verbindungen 50 bis 98% erreicht, und wobei die Schmelzviskosität eines erhaltenen Polyarylensulfides von 0,5 bis 500 Pas (5 bis 5000 Poise) ist, gemessen bei 310 °C und und einer Scherrate von 1200/s;

(B) einen Temperaturerhöhungsschritt, bei dem, während die Wassermenge je nach Erfordernis von 2,5 bis 7 Mol/Mol an zugeführtem Alkalimetallsulfid eingestellt wird, die Temperatur von der Temperatur von Schritt (A) auf 240 °C unter solchen Bedingungen angehoben wird, daß die Schmelzviskosität des erhaltenen Polymers bei 240 °C von 30 bis 1000 Pas (300 bis 10.000 Poise) ist, gemessen bei 310 °C und einer Scherrate von 1200/s, und wobei die Temperatur weiterhin von 240 °C zu der Temperatur für Schritt (C) bei einer Rate von 10 bis 100 °C/h erhöht wird; und

(C) eine zweite Polymerisationsstufe für die weitere Fortsetzung der Polymerisation bei einer Temperatur von 245 bis 290 °C, bis die Schmelzviskosität des Polyarylensulfid-Endproduktes einen Wert von nicht weniger 1 x $10^4$ Pas (1 x $10^5$ Poise) erreicht, gemessen bei 330 °C und einer Scherrate von 2/s.

2. Verfahren nach Anspruch 1,
worin von 0,005 bis 0,05 Mol der polyhaloaromatischen Verbindung pro Mol Alkalimetallsulfid verwendet werden.

3. Verfahren nach Anspruch 1 oder 2,
worin im Schritt (B) die Schmelzviskosität des bei 240 °C erhaltenen Polymers 70 bis 500 Pas (700 bis 5000 Poise) ist.

4. Verfahren nach einem der vorhergehenden Ansprüche,
worin in Schritt (B) die Temperatur von 240 °C bei 20 bis 70 °C/h erhöht wird.

5. Verfahren nach einem der vorhergehenden Ansprüche,
das so durchgeführt wird, daß der durchschnittliche Teilchendurchmesser des schließlich erhaltenen körnigen vernetzten Polyarylensulfides von 200 bis 1000 μm ist.

**Revendications**

1. Procédé de préparation d'un sulfure de polyarylène granulaire réticulé ayant un diamètre particulaire moyen compris entre 100 et 2000 μm, comprenant:

(A) une étape de polymérisation de stade initial pour obtenir un sulfure de polyarylène en faisant réagir un sulfure de métal alcalin, un composé dihaloaromatique et de 0,003 à 0,1 mole d'un composé polyhaloaromatique par mole du sulfure de métal alcalin, le composé polyhaloaromatique ayant trois substituants halogène par molécule ou plus, dans un solvant amide organique en présence de 0,5 à 2,9 moles d'eau par mole dudit sulfure de métal alcalin à une température au moins égale à 180 °C et inférieure à 235 °C jusqu'à ce que le rapport total de transformation desdits composés dihalo- et polyhaloaromatiques atteigne de 50 à 98% et que la viscosité à l'état fondu d'un sulfure de polyarylène obtenu soit de 0,5 à 50 Pa.s (5 à 5000 poise) mesurée à 310 °C et à une vitesse de cisaillement de 1200/seconde;

(B) une étape d'élévation de la température dans laquelle, tout en ajustant la quantité d'eau selon les besoins jusqu'à de 2,5 à 7 moles par mole de sulfure de métal alcalin introduit, on élève la température du niveau de l'étape (A) jusqu'à 240 °C dans des conditions telles que la viscosité à l'état fondu du polymère obtenu à 240 °C soit de 30 à 1000 Pa.s (300 à 10 000 poise), mesurée à 310 °C et à une vitesse de cisaillement de 1200/seconde, et la température est encore élevée de 240 °C à la température de l'étape (C) à une vitesse comprise entre 10 et 100 °C/heure; et

(C) une étape de polymérisation de second stade pour poursuivre encore la polymérisation à une température comprise entre 245 et 290 °C jusqu'à ce que la viscosité à l'état fondu du produit sulfure de polyarylène final atteigne une valeur d'au moins 1 x $10^4$ Pa.s (1 x $10^5$ poise) mesurée à 330 °C et à une vitesse de cisaillement de 2/seconde.

2. Procédé selon la revendication 1 dans lequel on utilise de 0,005 à 0,05 mole dudit composé polyhaloaromatique par mole dudit sulfure de métal alcalin.

3. Procédé selon la revendication 1 ou 2, dans lequel dans l'étape (B) la viscosité à l'état fondu du polymère obtenu à 240 °C est de 70 à 500 Pa.s (700 à 5000 poise).

**4.** Procédé selon l'une quelconque des revendications précédentes, dans lequel dans l'étape (B) la température est augmentée à partir de 240°C à raison de 20 à 70°C/heure.

**5.** Procédé selon l'une quelconque des revendications précédentes, qui est conduit de manière que le diamètre particulaire moyen du sulfure de polyarylène réticulé granulaire finalement obtenu soit de 200 à 1000 $\mu$m.